# EUROPEAN PATENT APPLICATION

(11) **EP 3 065 286 A1**
(43) Date of publication of application: **07.09.2016**
(21) Application number: 14858694.4
(22) Date of filing: 30.10.2014
(51) Int. Cl.: H02N 1/00

(54) **CODE RATE SWITCHING METHOD AND DEVICE FOR SMART TELEVISION**

(30) Priority: 30.10.2013 CN 201310530239
(71) Applicant: Le Shi Zhi Xin Electronic Technology (Tianjin) Limited, Beijing 100025 (CN)
(72) Inventor: TANG, Haibo, Beijing 100025 (CN); TIAN, Jiazi, Beijing 100025 (CN); TONG, Yonghui, Beijing 100025 (CN)
(74) Representative: Viering, Jentschura & Partner mbB Patent- und Rechtsanwälte
(86) International application number: PCT/CN2014/089909
(87) International publication number: WO 2015/062521

(57) **Abstract**

Disclosed is a bit rate switching method and device for a smart television. The method comprises: obtaining a current bit rate according to an average network bandwidth in the process of playing a first data source of multimedia data; and when the current bit rate is greater than a first bit rate, determining a difference value between the current bit rate and the first bit rate; when the current bit rate is less than the first bit rate, determining a difference value between the first bit rate and the current bit rate; and according to a comparison result of a trigger threshold and a difference value between the current bit rate and the first bit rate or a difference value between the first bit rate and the current bit rate, retrieving a second data source of the multimedia data from the server for playing or continuing retrieving the first data source for playing. In the process of playing multimedia data, the present application can automatically switch a bit rate matched with a network bandwidth according to the change in a network bandwidth, can solve the problem that the bit rate is required to be manually switched when a person watches a television program, and can guarantee the smooth and clear watching of a video, thereby simplifying user operations and improving the user experience.

## Description

### CROSS-REFERENCE

This application claims the benefit of Chinese Patent Application 201310530239.5, titled "Bit Rate Switching Method and Device for Smart Television", filed on October 30, 2013, the entire contents of which are incorporated herein by reference.

### TECHNICAL FIELD

The present application relates to the field of smart TVs, and more particularly, to a bit rate switching method and a bit rate switching device.

### BACKGROUND

With the improving of people's living standards, a smart TV has been used widely in families, and there is increasingly stronger tendency to replace a conventional TV. The smart TV is playing a more and more important role in the daily leisure and entertainment life of people.

Presently, most smart TVs are equipped with a function for playing network videos online or receiving network channels, and users may play on-demand network videos or watch network channels by connecting the smart TV to the network.

A traditional network video technology usually provides a video source with a common bit rate for videos, while users with different network bandwidths have different requirements on video quality; therefore, the traditional network video technology is difficult to satisfy diversified watching demands of users with different video qualities requirement, which is usually represented as follows: frequent jamming or buffering frequently occurs for users with a lower network bandwidth while watching network videos, and the network even gets disconnected so that the users cannot watch the videos. It is difficult for users with a higher network bandwidth to accept a video source with poor resolution or blurring picture; however, there are no video sources of higher quality for them to select. Therefore, in the case that the users with a higher bandwidth are satisfied to watch high definition videos, the users with a lower bandwidth cannot watch smoothly, while in the case that users with a limited bandwidth are satisfied to watch videos normally, the users with a higher bandwidth cannot make full use of the bandwidth resources thereof to watch high definition videos, which wastes bandwidth resources.

In order to solve the foregoing problems, the present video websites or the video channels have differentiated the same video source, i.e., the same video source is provided with different versions like super definition, high definition, standard definition and ordinary versions (the bit rates of the video sources in different versions are different from each other, wherein the bit rate of the video source of the super definition version is the highest, the bit rate of the video source of the high definition version comes second, the bit rate of the video source of the standard definition version comes third, and the bit rate of the video source of the ordinary is the lowest). After the user selects an on-demand video, a version with a bit rate matched with the network bandwidth condition of the user will be firstly selected by the user or a website server according to the network bandwidth condition of the user, then the video source of the version selected is played, so that the user can watch the video smoothly and clearly.

However, once the network bandwidth changes during the process of watching the video, the user cannot watch the video smoothly and clearly. In such a case, the user needs to manually select a new version again, which causes tedious operations and poor experience to the user. Similar problems may possibly occur to playing of audios.

### SUMMARY

The embodiment of the present application provides a bit rate switching method and a bit rate switching device for smart TVs, so as to solve the problem of manually switching the bit rate while watching TV programs.

In order to fulfill the foregoing objects, the embodiments of the present application employ the following technical solutions:
According to a first aspect, a bit rate switching method for smart TVs, includes: measuring, by every preset time period, an average network bandwidth in the preset time period during the process of playing a first data source of multimedia data, and acquiring a current bit rate according to the average network bandwidth, wherein the bit rate of the first data source is a first bit rate; when the current bit rate is greater than the first bit rate, determining the difference of the current bit rate and the first bit rate, retrieving a second data source of the multimedia data from a server to play or continuously retrieving the first data source to play according to a comparison result between the difference of the current bit rate and the first bit rate, and a triggering threshold , wherein the bit rate of the second data source is a second bit rate, and the difference of the second bit rate and the current bit rate is less than a switching threshold; when the current bit rate is less than the first bit rate, determining the difference of the first bit rate and the current bit rate, and retrieving the second data source of the multimedia data from the server to play or continuously retrieving the first data source to play according to the comparison result between the difference of the first bit rate and the current bit rate, and the triggering threshold, wherein the bit rate of the second data source is the second bit rate, and the difference of the current bit rate and the second bit rate is less than the switching threshold.

According to a second aspect, a computer-readable record medium recording a program used to execute the bit rate switching method is provided.

According to a third aspect, a bit rate switching device for smart TVs, includes: a detection module used to measure, by every preset time period, an average network bandwidth in the preset time period during the process of playing a first data source of multimedia data, the first data source having a first bit rate; a search module coupled to the detection module and used to acquire the current bit rate according to the average network bandwidth; a determination module coupled to the search module and used to, when the current bit rate is greater than first bit rate, determine the difference of the current bit rate and the first bit rate, and when the current bit rate is less than the first bit rate, determine the difference of the first bit rate and the current bit rate; and a control module coupled to the determination module and used to retrieve a second data source of the multimedia data from a server to play or continuously retrieve the first data source to play according to the comparison result between the difference of the first bit rate and the current bit rate, and the triggering threshold, wherein the bit rate of the second data source is a second bit rate, when the current bit rate is greater than the first bit rate, the difference of the second bit rate and the current bit rate is less than a switching threshold; and when the current bit rate is less than the first bit rate, the difference of the current bit rate and the second bit rate is less than the switching threshold.

### BRIEF DESCRIPTION OF THE DRAWINGS

- Fig. 1: is a flow chart of a method according to an embodiment of the present application.
- Fig. 1a: and Fig. 1b are schematic diagrams of embodiments of the present application.
- Fig. 2: is a flow chart of another method according to an embodiment of the present application.
- Fig. 3: is a flow chart of another method according to an embodiment of the present application.
- Fig. 4: is a flow chart of another method according to an embodiment of the present application.
- Fig. 5: is a flow chart of another method according to an embodiment of the present application.
- Fig. 6: is a flow chart of a device according to embodiments of the present application.
- Fig. 7: is a flow chart of another device according to an embodiment of the present application.
- Fig. 8: is a flow chart of another device according to an embodiment of the present application.
- Fig. 9: is a flow chart of another device according to an embodiment of the present application.

### PREFERRED EMBODIMENTS

The embodiments of the present application will be explained in details with reference to the drawings and embodiments hereinafter, so that the realization process of how to solve the technical problems using a technical means and achieve the technical effect can be sufficiently understood and implemented accordingly.

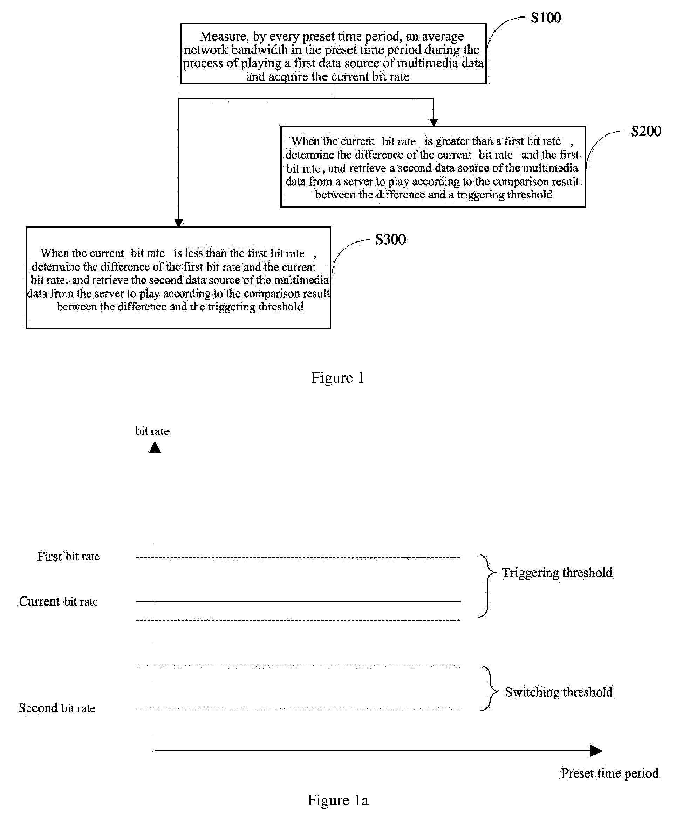

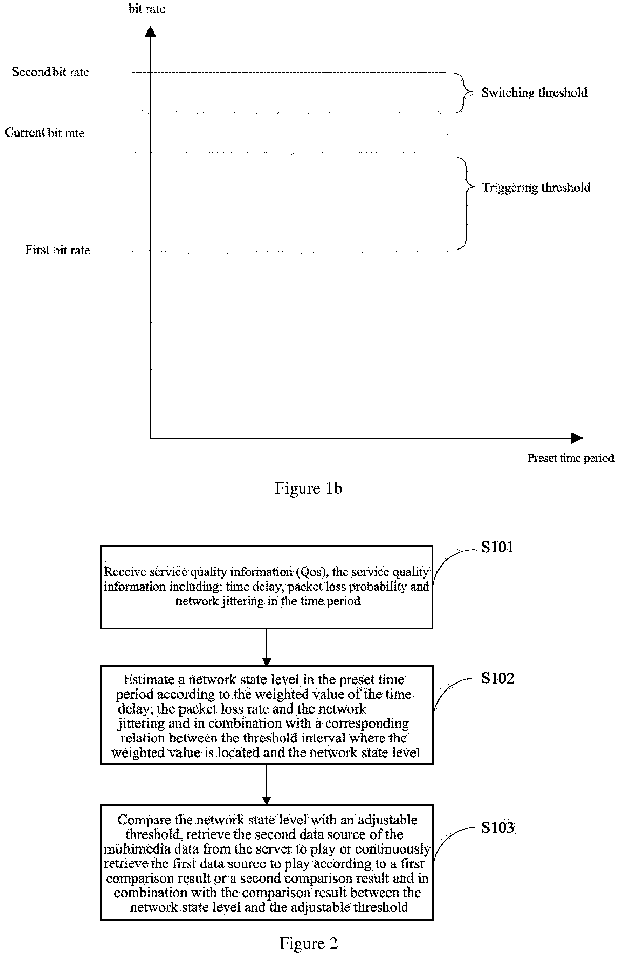

Fig. 1 is a flow chart of a method according to an embodiment of the present application.

Referring to Fig. 1, the embodiment of the present application provides a bit rate switching method for smart TV, including the following steps:
In S100, in every preset time period, an average network bandwidth in the preset time period is measured during the process of playing a first data source of multimedia data, and the current bit rate is acquired according to the average network bandwidth, wherein the bit rate of the first data source is a first bit rate.

In the embodiment of the present application, a server collects at least two multimedia data sources with different bit rates from the same multimedia data in advance, and correspondingly stores the multimedia data sources with different bit rates into different addresses. For instance, a first data source with a first bit rate of the multimedia data may be stored in a first address of the server, a second data source with the current bit rate of the multimedia data may be stored in a second address of the server, and a third data source with a second bit rate of the multimedia data may be stored in a third address of the server, or the like.

When a user needs to play certain multimedia data, the first data source with the first bit rate of the multimedia data is requested from the server through a client, the server responds to the request from the client and sends a first address in which the first data source of the multimedia data to the client is stored. It can be seen that the first address herein corresponds to the first bit rate of the multimedia data. At this moment, the client is linked to the first address, and the multimedia data with the first bit rate may be played through downloading or caching the first data source in the first address.

During the process of playing the first data source, the client determines a bit rate matched with the average network bandwidth as the current bit rate according to the average network bandwidth. In this way, the network condition in the current time period is used as a reference to control a data source played in the next period. It is certainly that the average network bandwidth in the next period may also be predicted according to the average network bandwidth in the preset time period, and a bit rate matched with the average network bandwidth in the next period is determined as the current bit rate. In this way, the network condition in the next period is used as a reference to control the data source played in the next period. In the solutions of the present application, the above two reference manners are both reasonable to complete the controlling while the present application is proceeding.

In S200, when the current bit rate is higher than the first bit rate, the difference of the first bit rate and the current bit rate is determined, and the second data source of the multimedia data is retrieved from the server to play or the first data source is continuously retrieved to play according to the comparison result between the difference of the first bit rate and the current bit rate, and the triggering threshold, wherein the bit rate of the second data source is the second bit rate, and the difference of the second bit rate and the current bit rate is less than a switching threshold.

In S300, when the current bit rate is less than the first bit rate, the difference of the first bit rate and the current bit rate is determined, and the second data source of the multimedia data is retrieved from the server to play or the first data source is continuously retrieved to play according to the comparison result between the difference of the first bit rate and the current bit rate, and the triggering threshold, wherein the bit rate of the second data source is the second bit rate, and the difference of the current bit rate and the second bit rate is less than the switching threshold.

In the foregoing steps S200 and S300, when the current bit rate is equal to or very closer to the first bit rate, the difference of the two is 0 or a very small value, i.e., the current network bandwidth condition is not changed or changed slightly relative to the network bandwidth condition before the multimedia data is played. In such a case, the change of the network bandwidth condition does not have tiny influence on the current playing, and the client may keep to retrieve the data source with the first bit rate selected by the user before watching the multimedia data (for example, network video) to play, so as to measure the average network bandwidth in next preset time period. The technical solution at this moment is similar to that of the foregoing embodiment, and will not be elaborated herein.

As shown in Fig. 1a and Fig. 1b, the sum of the triggering threshold and the switching threshold is less than or equal to the absolute value of the difference of the second bit rate and the first bit rate. As shown in Fig. 1a particularly, the second bit rate is less than the first bit rate. When the difference of the first bit rate and the current bit rate is greater than the triggering threshold, and the difference of the current bit rate and the second bit rate is less than the switching threshold, the second data source of the multimedia data is retrieved from the server to play; otherwise, the first data source is continuously retrieved from the server to play. As shown in Fig. 1b particularly, the first bit rate is less than the second bit rate. When the difference of the current bit rate and the first bit rate is greater than the triggering threshold, and the difference of the second bit rate and the current bit rate is less than the switching threshold, the second data source of the multimedia data is retrieved from the server to play; otherwise, the first data source is continuously retrieved from the server to play.

Moreover, in the foregoing steps S200 and S300, a current playing point of the first data source of the multimedia data is recorded, the second data source of the multimedia data is retrieved from the server, and the second data source of the multimedia data is played from the current playing point of the first data source. Certainly, for some data sources divided into fragmented data source according to the playing duration, the fragmented data with a play-point difference between the initial playing point and the current playing point limiting within a preset range is queried in the second data source, and may be retrieved to play, according to the current playing point of the first data source. Especially for streaming media data, the second data source may also be retrieved from a frame next to the current playing point according to the current playing point of the first data source. In this way, it does not need to download fragmented data source or data stream before the current playing point, which reduces the data flow and greatly improves the speed for downloading the second data source to the local end, so that the switching process is smoother. The current playing point recorded herein may be a current playing time or a current playing frame, so that it may be switched to the current playing time or current playing frame after re-downloading of the multimedia data with the second bit rate is completed. The data source with the second bit rate may be continuously played from the current playing time or current playing frame of the data source with the first bit rate recorded. It does not need to watch again from the beginning of the multimedia data or manually select the playing progress of the current playing point watched.

According to the technical solution provided by the embodiment of the present application, a data source with a bit rate matched with the network bandwidth may be switched automatically according to the variation of the network bandwidth during the process of playing the multimedia data. It may solve the problem of manually switching the bit rate while TV programs are watched. It ensures the videos to be watched smoothly and clearly, simplifies the user operation, and improves the user experience.

The present application will be explained hereinafter by using one application example.

In the prior art, the user may only select the data source with one certain bit rate to play before watching the multimedia data (for example, network video), and the data can only be subsequently played according to the bit rate corresponding to the select bit rate. The bit rate of the data source during watching cannot be adjusted according to the variation of the network bandwidth of the user during the process of watching the multimedia data.

In the embodiment of the present application, the preset time period may be a numerical value less than the entire playable time of the multimedia data, such as 2 minutes, 10 minutes or 200 seconds; moreover, the end time of the current preset time period is the start time of next preset time period, so that the average network bandwidth in the preset time period is periodically measured during the process of playing the multimedia data, and the current bit rate of the multimedia data matched with the average network bandwidth in the time period, i.e., a bit rate version of the multimedia data which is the most suitable to be played under the current bandwidth condition is determined.

The data source of the multimedia data may be divided into a plurality of levels herein; for instance, there may be three levels of data sources including a high bit rate, a medium bit rate and a low bit rate under a common resolution of 1080P, wherein the data source at each level is corresponding to one bit rate. Generally speaking, the bit rate of the data source at the high bit rate level is higher than the bit rate of the data source at the medium bit rate level, while the bit rate of the data source at the medium bit rate level is higher than the bit rate of the data source at the low bit rate level, which also means that the definition of the data source at the high bit rate level is higher, and certainly, the data source at this level has a higher requirement on the network bandwidth.

If the data source at the medium bit rate level is being played at present, and the bit rate of the data source is A2, it is found by detection that the current bit rate that the average network bandwidth supports to play is B.

When the current bit rate B is greater than the bit rate A2, the difference of the current bit rate B and the bit rate A2 is greater than a triggering threshold 1, which indicates that the current bit rate B has been much greater than the bit rate A2, and the difference of a bit rate A3 and the current bit rate B is less than a switching threshold 1, which indicates that the current bit rate B is close to, reaching to or even exceeding the bit rate A3, and the bit rate A3 is just the bit rate of the data source at the high bit rate level; therefore, the data source of the multimedia data is directly retrieved from the server to play according to the bit rate A3. Certainly, the data source of the multimedia data can also be retrieved from the server according to the current bit rate B. The server after automatically identifying the current bit rate B, finds out the bit rate A3 which is the closest to the current bit rate B, and retrieves the data source at the high bit rate level corresponding to the bit rate A3 to play. It can be seen that the triggering threshold 1 is to measure whether the current bit rate B has been far greater than the bit rate A2 for playing the data source. The switching threshold 1 is intended to measure which bit rate the current bit rate B is close to after the current bit rate B is greater than the bit rate A2; therefore, the triggering threshold 1 is relatively large, and the switching threshold 1 is relatively small.

When the current bit rate B is less than the bit rate A2, the difference of the bit rate A2 and the current bit rate B is greater than a triggering threshold 2, which indicates that the current bit rate B has been much less than the bit rate A2, and the difference of the current bit rate B and a bit rate A1 is less than a switching threshold 2, which indicates that the current bit rate B is close to, equal to or even less than the bit rate A1, and the bit rate A1 is just the bit rate of the data source at the low bit rate level; therefore, the data source of the multimedia data is directly retrieved from the server to play according to the bit rate A1. Of course, the data source of the multimedia data can also be retrieved from the server according to the current bit rate B. The server after automatically identifying the current bit rate B, finds out the bit rate A1 which is the closest to the current bit rate B, and calls in the data source at the low bit rate level corresponding to the bit rate A1 to play. It can be seen that the triggering threshold 2 is to measure whether the current bit rate B has been far less than the bit rate A2 for playing the data source. The switching threshold is intended to measure which bit rate the current bit rate B is closer to after the current bit rate B is less than the bit rate A2; therefore, the triggering threshold 2 is relatively large, and the switching threshold 2 is relatively small.

Certainly, the triggering threshold 2 cannot be too large, because when the current bit rate B is much less than the bit rate A2, it indicates that the current network condition cannot cope with the data source with the bit rate A2, which will cause jammed playing effects. Compared with the situation of switching to the higher bit rate A3, the timing for switching to the lower bit rate A1 should be earlier, and the triggering threshold 2 should be less than the triggering threshold 1.

When difference of the current bit rate B and the bit rate A2 is less than the triggering threshold 1, and the difference of the bit rate A2 and the current bit rate B is less than the triggering threshold 2, it indicates that the current bit rate B is not much greater than the bit rate A2, or is not much less than the bit rate A2, which shows that the present network bandwidth can completely cope with the data source with the code rate, and does not need to be switched. Then the data source at the medium bit rate level with the bit rate A2 is continuously retrieved from the server to play.

It should be explained that the sum of the triggering threshold 1 and the switching threshold 1 is less than or equal to the absolute value of the difference of the bit rate A3 and the bit rate A2, and the sum of the triggering threshold 2 and the switching threshold 2 is less than or equal to the absolute value of the difference of the bit rate A2 and the bit rate A1.

Fig. 2 is a flow chart of another method according to embodiments of the present application.

Referring to Fig. 2, the steps provided are as follows: in step S200 and step S300 of Fig. 1, retrieving the second data source of the multimedia data from the server to play or continuously retrieving the first data source to play according to the comparison result between the difference of the first bit rate and the current bit rate and the triggering threshold further includes the following operations:
In S101, service quality information (Qos) is received. The service quality information includes: time delay, packet loss rate and network jittering in the time period.
In S102, a network state level in the preset time period is estimated according to the weighted value of the time delay, the packet loss rate and the network jittering and in combination with a corresponding relation between the threshold interval where the weighted value is located and the network state level, wherein the smaller the weighted value of the time delay, the packet loss rate and the network jittering is, the higher the network state level is.

The corresponding relation between the threshold interval and the network state level is maintained in a smart TV. After the weighted value is determined, and then a corresponding network state level can be acquired by detecting which threshold interval where the weighted value is located. The smaller the weighted value of the time delay, the packet loss rate and the network jittering is, the better the network condition is, and then the higher the corresponding network state level is.

In S103, the network state level is compared with an adjustable threshold. The second data source of the multimedia data is retrieved from the server to play or the first data source is continuously retrieved to play according to a first comparison result or a second comparison result and in combination with the comparison result between the network state level and the adjustable threshold; wherein, the comparison result between the difference of the current bit rate and the first bit rate, and the triggering threshold and the comparison result between the difference of the second bit rate and the current bit rate, and the switching threshold are served as the first comparison result; and the comparison result between the difference of the first bit rate and the current bit rate and the triggering threshold and the comparison result between the difference of the current bit rate and the second bit rate and the switching threshold are served as the second comparison result.

The adjustable threshold includes an upper adjustable threshold and a lower adjustable threshold, wherein the upper adjustable threshold and the lower adjustable threshold are preset according to experience or prior data analysis.

When the network state level is less than the lower adjustable threshold, it indicates that the current network state is not good, which may help determine that there may be a problem to play the data source with the first bit rate at present, and it is better to switch the multimedia resource into a data source with a lower bit rate. When comparing the current bit rate with the first bit rate, if the current bit rate is less than the first bit rate, while the difference of the first bit rate and the current bit rate is greater than the triggering threshold and the difference of the current bit rate and the second bit rate is less than the switching threshold, it indicates that the multimedia resource needs to be switched to a data source with a lower bit rate at this moment. Apparently, the two comparison results are consistent, and retrieving the second data source of the multimedia data to play in step S300 is performed. In this example, if the network state level is not less than the lower adjustable threshold, it indicates that the current network state is good, and it is not required to switch the multimedia resource to a data source with a lower bit rate at this moment. However when comparing the current bit rate with the first bit rate, if the current bit rate is less than the first bit rate, and the difference of the first bit rate and the current bit rate is greater than the triggering threshold and the difference of the current bit rate and the second bit rate is less than the switching threshold, it indicates that the multimedia resource needs to be switched to a data source with a lower bit rate at this moment. Apparently, the two comparison results are not consistent, which indicates that it is not a proper occasion to switch the data source at this moment, and the network state may possibly be not stable for a short period. At this moment, retrieving the second data source of the multimedia data to play in step S300 is not executed temporarily, continuously retrieving the first data source to play.

When the network state level is higher than the upper adjustable threshold, it indicates that the current network state is good, which may help determine that the data source with the first bit rate can be played very smooth at present, and a condition that the more clear data source may be played may exist. When comparing the current bit rate with the first bit rate, if the current bit rate is greater than the first bit rate, it confirms that the current network state becomes good; when the difference of the current bit rate and the first bit rate is greater than the triggering threshold and the difference of the second bit rate and the current bit rate is less than the switching threshold, it indicates that the multimedia resource may be switched to a data source with higher bit rate at this moment. Apparently, the two comparison results are consistent, and retrieving the second data source of the multimedia data to play in step S200 is performed. In the example, if the current network state level is not higher than the lower adjustable threshold, it indicates that the current network state is not good enough, and there is no sufficient condition to switch the multimedia resource to a data source with a higher bit rate._ When comparing the current bit rate with the first bit rate, if the current bit rate is greater than the first bit rate, the difference of the current bit rate and the first bit rate is greater than the triggering threshold and the difference of the second bit rate and the current bit rate is less than the switching threshold, it indicates that the multimedia resource needs to be switched to a data source with a higher bit rate at this moment. Apparently, the two comparison results are not consistent, which indicates that it is not a proper occasion to switch the data sources at this moment, and the network state may possibly be relatively good for a short period and even for an instantaneous period, and the network state thereafter cannot be kept stably. At this moment, retrieving the second data source of the multimedia data to play in step S300 is not executed temporarily, continuously retrieving the first data source to play.

During the process of playing the multimedia data, the technical solution provided by the embodiment of the present application provides an auxiliary solution for determining the switching according to the difference of the current bit rate and the first bit rate, and the triggering threshold, and for determining the current network state. When an auxiliary determination result conducted through the network state is opposite to the comparison result between the difference of the current bit rate and the first bit rate, and the triggering threshold, it indicates that there are risks for switching at the moment, and then the data source with an original bit rate is continuously retrieved to play temporarily. When the auxiliary determination result conducted through the network state is consistent with the comparison result between the difference of the current bit rate and the first bit rate, and the triggering threshold, the switching can be conducted directly. This determination mechanism is more stable and perfect, which can ensure the accuracy of switching to the maximum extent, so that the playing effects for the data source after switching may be brought indeed, rather than that the playing of the data source after switching is jammed due to wrong estimation.

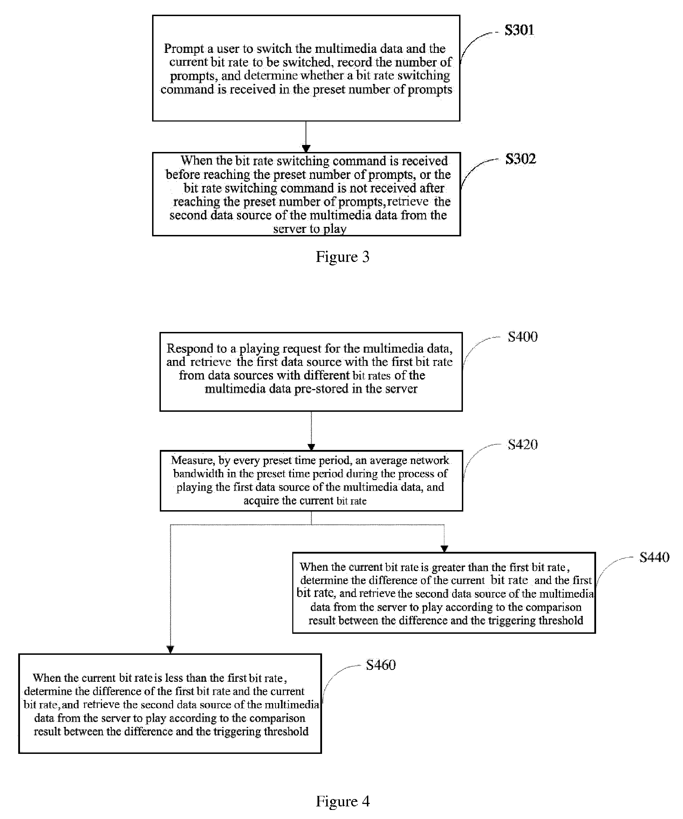

Fig. 3 is a flow chart of another method according to an embodiment of the present application.

As shown in Fig. 3, and on the basis of the embodiment described in Fig. 1, retrieving the second data source of the multimedia data from the server to play or continuously calling the first data source to play in step S200 and/or S300 further includes the following steps:
In S301, a user is prompted to switch the multimedia data and the current bit rate to be switched, the number of prompts is recorded, and whether a bit rate switching command is received within the preset number of prompts is determined.

In step S302, when the bit rate switching command is received before reaching the preset number of prompts, or the bit rate switching command is not received after reaching the preset number of prompts, the second data source of the multimedia data is retrieved from the server to play.

It should be illustrated that in the embodiment of the present application, no matter the bit rate is manually switched by the user or automatically switched by the client, the client may firstly record the current playing point of the first data source of the multimedia data before switching, and then initiate a bit rate switching request to the server. The server responds to the request of the client, and may send a second address storing the second data source of the multimedia data to the client. The second address herein stores the second data source with a second bit rate of the multimedia data. At this moment, the client is linked to the second address, downloads or caches the second data source of the second address, and starts playing the second data source from the current playing point of the first data source recorded, wherein the bit rate of the second data source herein is the second bit rate. In this way, the user may continue the previous watching progress, and start watching the multimedia data with the second bit rate from the current playing point of the first bit rate without watching from the beginning of the multimedia data again or manually selecting the playing progress of the current playing point watched, which may further improve the user experience. Certainly, for some data sources divided into fragmented data source according to the playing duration, the fragmented data with a play-point difference between the initial playing point and the current playing point limiting within a preset range is queried in the second data source, and may be retrieved to play, according to the current playing point of the first data source. Especially for streaming media data, the second data source may also be retrieved from a frame next to the current playing point according to the current playing point of the first data source. In this way, it does not need to download fragmented data source or data stream before the current playing point, which reduces the data flow, and greatly improves the speed for downloading the second data source to the local at the same time, so that the switching process is smoother.

In the embodiment of the present application, the client may prompt the bit rate for manually switching the multimedia data to the user, and record the number of prompts. If the user manually conducts a bit rate switching operation in the preset number of prompts, the client will receive a bit rate switching command. For instance, when the preset number of prompts is five, if the client receives the bit rate switching command in five prompts, the client will respond to the bit rate switching command immediately at this moment to retrieve the second data source of the multimedia data from the server and play the second data source of the multimedia data. If the user does not conduct a switching operation manually in the preset number of prompts; for instance, when the preset number of prompts is five, if the client does not receive the bit rate switching command after five prompts, then the client may automatically retrieve the second data source of the multimedia data from the server and play the second data source of the multimedia data after reaching the preset number of prompts so as to prevent the change of the current network bandwidth from continuously affecting the subsequent playing. The bit rate of the second data source herein is the second bit rate; in this way, the bit rate may either be manually switched by the user, or be automatically switched. This brings more choices for the user, and can prevent the change of the current network bandwidth from continuously affecting the subsequent playing, so that the user experience is further improved.

Fig. 4 is a flow chart of another method according to embodiments of the present application.

As shown in Fig. 4, a step of selecting a data source with an initial first bit rates added on the basis of the embodiment as shown in Fig. 1, wherein the step occurs before step S100.

In S400, a playing request for the multimedia data is responded, and the first data source with the first bit rate is retrieved from data sources with different bit rates of the multimedia data pre-stored in the server.

The first bit rate is served as the bit rate of the data source that is initially played, then there may be two manners of selecting the type of bit rates:
1) responding to the playing request, identifying an accessed network type, an initial network bandwidth, the number of accessing network users and a terminal processing capability, and determining the first bit rate according to the network type accessed, the current network bandwidth, the number of accessed users of the current network and the terminal processing capability; in this manner, the data source with a proper bit rate may be selected more flexibly according to the current network state and the operating condition of the smart TV; and
2) responding to the playing request, identifying a preset default bit rate, and taking the default bit rate as the first bit rate. A default bit rate is stored in the smart TV, which may be set by factory settings or user-defined, and may more likely be the latest record.

Usually, after the user selects on-demand multimedia data and before the smart TV plays the multimedia data, the user or the server may be required to determine a bit rate matched with the initial network bandwidth (i.e. the first bit rate in the embodiment of the present application) from the data sources corresponding to several different bit rates provided by the server according to the initial network bandwidth before playing. The measurement of the initial network bandwidth herein may be implemented through mutually transmitting a message between the server and the client, and measuring the transmitting speed of the message. Moreover, the measurement of the initial network bandwidth may also be implemented through uploading or downloading a certain amount of data, then measuring the uploading or downloading time of the data, and calculating the amount of data uploaded or downloaded in unit time. The embodiment of the present application does not have any limitation to the methods for measuring the initial network bandwidth.

In S420, in every preset time period, an average network bandwidth in the preset time period is measured during the process of playing the first data source of the multimedia data, and the current bit rate is acquired according to the average network bandwidth, wherein the bit rate of the first data source is the first bit rate.

In S440, when the current bit rate is greater than the first bit rate, the difference of the current bit rate and the first bit rate is determined, and the second data source of the multimedia data is retrieved from the server to play or the first data source is continuously retrieved to play according to the comparison result between the difference of the first bit rate and the current bit rate, and the triggering threshold, wherein the bit rate of the second data source is the second bit rate, and the difference of the second bit rate and the current bit rate is less than the switching threshold.

In S460, when the current bit rate is less than the first bit rate, the difference of the first bit rate and the current bit rate is determined, and the second data source of the multimedia data is retrieved from the server to play or the first data source is continuously retrieved to play according to the comparison result between the difference of the first bit rate and the current bit rate, and the triggering threshold, wherein the bit rate of the second data source is the second bit rate, and the difference of the current bit rate and the second bit rate is less than the switching threshold.

In the example, the data source with a proper bit rate may be selected more flexibly according to the current network state and the operating condition of the smart TV. Certainly, a default bit rate is stored in the smart TV, which may be set by factory settings or user-defined, and may more possibly be the latest record.

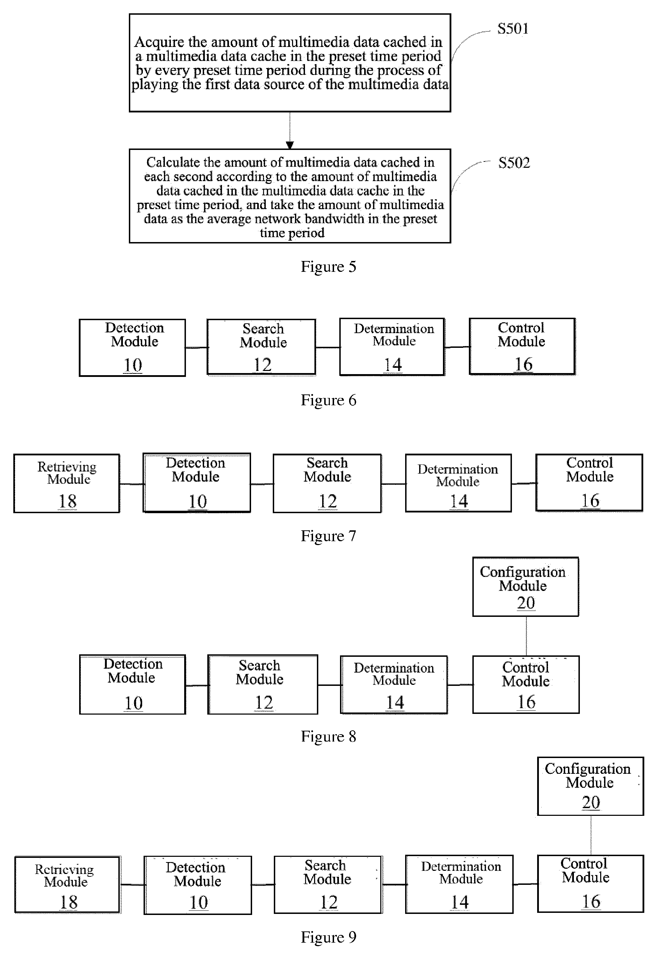

Fig. 5 is a flow chart of another method according to embodiments of the present application.

As shown in Fig. 5, measuring, by every preset time period, the average network bandwidth in the preset time period in step S100 of Fig. 1 particularly includes the following steps:
In S501, the amount of multimedia data cached in a multimedia data cache in the preset time period is determined in every preset time period during the process of playing the first data source of the multimedia data.
In S502, the amount of multimedia data cached in each second is calculated according to the multimedia data volume cached in the multimedia data cache in the preset time period, and taken as the average network bandwidth in the preset time period.

In the embodiment of the present application, after on-demand multimedia data is selected, a bit rate matched with the initial network bandwidth (i.e. the first bit rate in the embodiment of the present application) is determined from the data sources corresponding to several different bit rates provided by the server according to the initial network bandwidth before playing.

Then during the process of playing the multimedia data, the average network bandwidth in the preset time period can also be periodically measured, so as to determine a bit rate of the multimedia data matched with the average network bandwidth in the time period i.e., the second bit rate in the embodiment of the present application, which is also the bit rate version of the multimedia data that is the most properly played under the current bandwidth condition.

Besides the method for measuring the average network bandwidth provided by the foregoing embodiment of the present application, the measurement of the average network bandwidth herein may also be implemented through mutually transmitting a message between the server and the client in a preset time period, and measuring the transmitting speed of the message. Moreover, the measurement of the average network bandwidth herein may also be implemented through uploading or downloading a certain amount of data in a preset time period, and then measuring the amount of data uploaded or downloaded in the preset time period, so that the amount of data uploaded or downloaded in unit time is calculated. The embodiment of the present application does not have limitation to the methods for measuring the average network bandwidth.

According to the technical solution provided by the embodiment of the present application, the average network bandwidth in the preset time period may be measured by every preset time period during the process of playing the first data source with the first bit rate of the multimedia data; in this way, a data source with a bit rate matched with the network bandwidth may be switched automatically according to the change of the network bandwidth during the process of playing the multimedia data, which may solve the problem of manually switching the bit rate while watching TV programs, can ensure to watch videos smoothly and clearly, simply the user operation, and improve the user experience.

Fig. 6 is a structural diagram of a device according to embodiments of the present application.

As shown in Fig. 6, a bit rate switching device for smart TV provided by the embodiment of the present application on the basis of the foregoing embodiment particularly includes:
a detection module 10 used to measure, by every preset time period, an average network bandwidth in the preset time period during the process of playing a first data source of multimedia data, the first data source having a first bit rate;
a search module 12 coupled to the detection module 11 and used to acquire the current bit rate according to the average network bandwidth;
a determination module 14 coupled to the search module 12 and used to, when the current bit rate is greater than first bit rate, determine the difference of the current bit rate and the first bit rate, and when the current bit rate is less than the first bit rate, determine the difference of the first bit rate and the current bit rate; and
a control module 16 coupled to the determination module 14 and used to retrieve a second data source of the multimedia data from a server to play or continuously retrieve the first data source to play according to the comparison result between the difference of the first bit rate and the current bit rate, and the triggering threshold, wherein the bit rate of the second data source is a second bit rate, when the current bit rate is greater than the first bit rate, the difference of the second bit rate and the current bit rate is less than a switching threshold; and when the current bit rate is less than the first bit rate, the difference of the current bit rate and the second bit rate is less than the switching threshold. To be specific, when the difference of the current bit rate and the first bit rate is greater than the triggering threshold and the difference of the second bit rate and the current bit rate is less than the switching threshold, it retrieves the second data source of the multimedia data from the server to play; otherwise, it continuously retrieves the first data source from the server to play; and when the difference of the first bit rate and the current bit rate is greater than the triggering threshold and the difference of the current bit rate and the second bit rate is less than the switching threshold, it retrieves the second data source of the multimedia data from the server to play; otherwise, it continuously retrieves the first data source from the server to play.

When acquiring the current bit rate according to the average network bandwidth, the search module 12 is further used to determine a bit rate matched with the average network bandwidth as the current bit rate according to the average network bandwidth, or used to predict the average network bandwidth in the next period according to the average network bandwidth in the preset time period, and determine a bit rate matched with the average network bandwidth in the next period as the current bit rate.

When measuring, by every preset time period, the average network bandwidth in the preset time period, the detection module 10 is further used to determine the amount of multimedia data cached in a multimedia data cache in the preset time period during the process of playing the first data source of the multimedia data; calculate the amount of multimedia data cached in each second according to the amount of multimedia data cached in the multimedia data cache in the preset time period, and take the amount of multimedia data cached in each second as the average network bandwidth in the preset time period.

The control module 16 further includes:
an information acquisition unit used to receive service quality information in the preset time period, the service quality information including: time delay, packet loss rate and network jittering in the time period.
a network estimation unit used to estimate a network state level in the preset time period according to the weighted value of the time delay, the packet loss rate and the network jittering and in combination with a corresponding relation between the threshold interval where the weighted value is located and the network state level, wherein the smaller the weighted value of the time delay, the packet loss rate and the network jittering is, the higher the network state level is; and
a media control unit used to compare the network state level with an adjustable threshold, retrieve the second data source of the multimedia data from the server to play or continuously retrieve the first data source to play according to a first comparison result or a second comparison result and in combination with the comparison result between the network state level and the adjustable threshold; wherein, the comparison result between the difference of the current bit rate and the first bit rate, and the triggering threshold and the comparison result between the difference of the second bit rate and the current bit rate, and the switching threshold are served as the first comparison result; and the comparison result between the difference of the first bit rate and the current bit rate, and the triggering threshold and the comparison result between the difference of the current bit rate and the second bit rate and the switching threshold are served as the second comparison result.

When retrieving the second data source of the multimedia data from the server to play or continuously retrieving the first data source to play, the control module 16 is further used to prompt a user to switch the multimedia data and the current bit rate to be switched, record the number of prompts, and determine whether a bit rate switching command is received in the preset number of prompts; and when the bit rate switching command is received before reaching the preset number of prompts, or the bit rate switching command is not received after reaching the preset number of prompts, the second data source of the multimedia data is retrieved from the server to play.

The control module 16 is further used to record a current playing point of the first data source of the multimedia data, retrieve the second data source of the multimedia data from the server, and start playing the second data source of the multimedia data from the current playing point of the first data source. Certainly, for some data sources divided into fragmented data source according to the playing duration, the fragmented data with a play-point difference between the initial playing point and the current playing point limiting within a preset range is queried in the second data source, and may be retrieved to play, according to the current playing point of the first data source. Especially for streaming media data, the second data source may also be retrieved from a frame next to the current playing point according to the current playing point of the first data source. In this way, it does not need to download fragmented data source or data stream before the current playing point, which reduces the data flow and greatly improves the speed for downloading the second data source to the local at the same time, so that the switching process is smoother.

As shown in Fig. 7, the bit rate switching device for smart TV provided by the embodiment of the present application on the basis of Fig. 6 further includes:
a retrieving module 18 coupled to the detection module 10 and used to respond to a playing request for the multimedia data, and retrieve the first data source with the first bit rate from data sources with different bit rates of the multimedia data pre-stored in the server, and further used to respond to the playing request, identify an accessed network type, an initial network bandwidth, the number of accessing network users and a terminal processing capability, and determine the first bit rate according to the network type accessed, the current network bandwidth, the number of accessed users of the current network and the terminal processing capability; or, respond to the playing request, identify a preset default bit rate, and take the default bit rate as the first bit rate.

As shown in Fig. 8, the bit rate switching device for smart TV provided by the embodiment of the present application on the basis of Fig. 6 further includes:
a configuration module 20 coupled with the control module 16 and used to configure the triggering threshold and the switching threshold, wherein the sum of the triggering threshold and the switching threshold is less than or equal to the absolute value of the difference of the second bit rate and the first bit rate.

As shown in Fig. 9, the bit rate switching device for smart TV provided by the embodiment of the present application on the basis of Fig. 6 may further include:
a retrieving module 18 coupled to the detection module 10 and used to respond to a playing request for the multimedia data, and retrieve the first data source with the first bit rate from data sources with different bit rates of the multimedia data pre-stored in the server, and further used to respond to the playing request, identify an accessed network type, an initial network bandwidth, the number of accessing network users and a terminal processing capability, and determine the first bit rate according to the accessed network type, the current network bandwidth, the number of accessing users of the current network and the terminal processing capability, or respond to the playing request, identify a preset default bit rate, and take the default bit rate as the first bit rate;
a configuration module 20 coupled with the control module 16 and used to configure the triggering threshold and the switching threshold, wherein the sum of the triggering threshold and the switching threshold is less than or equal to the absolute value of the difference of the second bit rate and the first bit rate.

Those skilled in the art may clearly understand that, in order to describe conveniently and simply, it is only illustrated by taking the division of each functional module above as an example. In practical application, the foregoing functions may be finished by different functional modules according to requirements. That is, the interior structure of the apparatus is divided into different functional modules so as to finish all or part of the functions described above. For specific working processes of the device described above, reference may be made to corresponding processes in the foregoing method embodiments, which will not be elaborated herein.

In several embodiments of the present application, it should be understood that the disclosed device and method may be implemented in other ways. For example, the device embodiments described in the following are only exemplary.

The units described may or may not be physically separated from each other, and the parts shown as units may be one or more physical units, that is, the parts may be located at the same place, and may also be distributed to multiple different places. A part or all of the units may be selected according to an actual requirement to achieve the objectives of the solutions in the embodiments.

In addition, function units in the embodiments of the present application may be integrated into a processing unit, or each unit exists singly and physically, or two or more units are integrated into one unit. The foregoing integrated unit may either be fulfilled by using a hardware form, or be fulfilled by using a software function module form.

If the integrated unit is implemented in the form of a software function unit and is sold or used as an independent product, it may be stored in a readable storage medium. Based on such understanding, the technical solutions of the present application essentially, or the part contributing to the prior art, or all or a part of the technical solutions may be implemented in the form of a software product. The software product is stored in a storage medium and includes several commands for instructing a device (which may be a single chip, a chip and so on) or a processor to execute all or a part of steps of the methods described in the embodiments of the present application. The abovementioned storage medium includes: any medium that is capable of storing program codes, such as a U disk, a mobile hard disk drive, a read-only memory (ROM, Read-Only Memory), a random access memory (RAM, Random Access Memory), a magnetic disk, or an optical disk.

The above description is merely detailed implementation manner of the present application, but not intended to limit the protection scope of the present application. Any changes or replacements easily figured out by those skilled in the art without departing from the technical scope disclosed by the present application shall all fall within the protection scope of the present application. Therefore, the protection scope of the present application shall be subjected to the protection scope of the claims.

### Industrial Applicability

According to the bit rate switching method and device for smart TV provided by the embodiments of the present application, a bit rate matched with the network bandwidth may be switched automatically according to the change of the network bandwidth during the process of playing the multimedia data, which may solve the problem of manually switching the bit rate while watching TV programs, can ensure to watch videos smoothly and clearly, simply the user operation, and improve the user experience.

## Claims

1. A bit rate switching method for smart TV, **characterized in that** the method comprises:
measuring, by every preset time period, an average network bandwidth in the preset time period during a process of playing a first data source of multimedia data, and acquiring a current bit rate according to the average network bandwidth, wherein the bit rate of the first data source is a first bit rate;
when the current bit rate is greater than the first bit rate, determining the difference of the current bit rate and the first bit rate, retrieving a second data source of the multimedia data from a server to play or continuously retrieving the first data source to play according to a comparison result between the difference of the current bit rate and the first bit rate and a triggering threshold, wherein the bit rate of the second data source is a second bit rate, and the difference of the second bit rate and the current bit rate is less than a switching threshold; and
when the current bit rate is less than the first bit rate, determining the difference of the first bit rate and the current bit rate, and retrieving the second data source of the multimedia data from the server to play or continuously retrieving the first data source to play according to a comparison result between the difference of the first bit rate and the current bit rate, and the triggering threshold, wherein the bit rate of the second data source is the second bit rate, and the difference of the current bit rate and the second bit rate is less than the switching threshold.

2. The bit rate switching method according to claim 1, **characterized in that**,
the sum of the triggering threshold and the switching threshold is less than or equal to an absolute value of difference of the second bit rate and the first bit rate.

3. The bit rate switching method according to claim 1, **characterized in that** acquiring the current bit rate according to the average network bandwidth further comprises:
determining a bit rate matched with the average network bandwidth as the current bit rate according to the average network bandwidth; or,
predicting an average network bandwidth in a next time period according to the average network bandwidth in the preset time period, and determining a bit rate matched with the average network bandwidth in the next period as the current bit rate.

4. The bit rate switching method according to claim 1, **characterized in that** retrieving the second data source of the multimedia data from the server to play or continuously retrieving the first data source to play according to the comparison result between the difference of the first bit rate and the current bit rate, and the triggering threshold further comprises:
receiving service quality information, the service quality information comprising: time delay, packet loss rate and network jittering in the time period;
estimating a network state level in the preset time period according to a weighted value of the service quality information and in combination with a corresponding relation between a threshold interval where the weighted value is located and the network state level, wherein the smaller the weighted value of the service quality information is, the higher the network state level is;
comparing the network state level with an adjustable threshold, retrieving the second data source of the multimedia data from the server to play or continuously retrieving the first data source to play according to a first comparison result or a second comparison result and in combination with a comparison result between the network state level and the adjustable threshold; wherein, the comparison result between the difference of the current bit rate and the first bit rate, and the triggering threshold and the comparison result between the difference of the second bit rate and the current bit rate and the switching threshold are served as the first comparison result; and the comparison result between the difference of the first bit rate and the current bit rate, and the triggering threshold and the comparison result between the difference of the current bit rate and the second bit rate and the switching threshold are served as the second comparison result.

5. The bit rate switching method according to claim 1 or 4, **characterized in that** retrieving the second data source of the multimedia data from the server to play or continuously retrieving the first data source to play according to the comparison result between the difference of the first bit rate and the current bit rate and the triggering threshold further comprises:
when the difference of the current bit rate and the first bit rate is greater than the triggering threshold and the difference of the second bit rate and the current bit rate is less than the switching threshold, retrieving the second data source of the multimedia data from the server to play; otherwise, continuously retrieving the first data source from the server to play; and
when the difference of the first bit rate and the current bit rate is greater than the triggering threshold and the difference of the current bit rate and the second bit rate is less than the switching threshold, retrieving the second data source of the multimedia data from the server to play; otherwise, continuously retrieving the first data source from the server to play.

6. The bit rate switching method according to claim 5, **characterized in that** retrieving the second data source of the multimedia data from the server to play further comprises:
prompting a user to switch the multimedia data and the current bit rate to be switched, recording the number of prompts, and determining whether a bit rate switching command is received in the preset number of prompts; and
when the bit rate switching command is received before reaching the preset number of prompts, or the bit rate switching command is not received after reaching the preset number of prompts, retrieving the second data source of the multimedia data from the server to play.

7. The bit rate switching method according to claim 1, **characterized in that** retrieving the second data source of the multimedia data from the server to play further comprises:
recording a current playing point of the first data source of the multimedia data, retrieving the second data source of the multimedia data from the server, and starting playing the second data source of the multimedia data from the current playing point of the first data source.

8. The bit rate switching method according to claim 1, **characterized in that** the method, before the process of playing the first data source of the multimedia data, further comprises:
responding to a playing request for the multimedia data, and retrieving the first data source with the first bit rate from data sources with different bit rates of the multimedia data pre-stored in the server.

9. The bit rate switching method according to claim 8, **characterized in that** responding to the playing request for the multimedia data further comprises:
responding to the playing request, identifying an accessed network type, an initial network bandwidth, the number of accessing network users and a terminal processing capability, and determining the first bit rate according to the network type accessed, a current network bandwidth, the number of accessing users of a current network and the terminal processing capability; or,
responding to the playing request, identifying a preset default bit rate, and taking the default bit rate as the first bit rate.

10. The bit rate switching method according to claim 1, **characterized in that** measuring, by every preset time period, the average network bandwidth in the preset time period further comprises:
determining the amount of multimedia data cached in a multimedia data cache in the preset time period during the process of playing the first data source of the multimedia data; and
calculating the amount of multimedia data cached in each second according to the amount of multimedia data cached in the multimedia data cache in the preset time period, and taking the amount of multimedia data cached in each second as the average network bandwidth in the preset time period.

11. A computer-readable record medium recording a program used to execute the bit rate switching method according to any one of claims 1 to 10.

12. A bit rate switching device for smart TV, **characterized by** comprising:
a detection module used to measure, by every preset time period, an average network bandwidth in the preset time period during a process of playing a first data source of multimedia data, the first data source having a first bit rate;
a search module coupled to the detection module and used to acquire a current bit rate according to the average network bandwidth;
a determination module coupled to the search module and used to, when the current bit rate is greater than the first bit rate, determine the difference of the current bit rate and the first bit rate, and when the current bit rate is less than the first bit rate, determine the difference of the first bit rate and the current bit rate; and
a control module coupled to the determination module and used to retrieve a second data source of the multimedia data from a server to play or continuously retrieve the first data source to play according to a comparison result between the difference of the first bit rate and the current bit rate and a triggering threshold, wherein the bit rate of the second data source is a second bit rate, when the current bit rate is greater than the first bit rate, the difference of the second bit rate and the current bit rate is less than a switching threshold; and when the current bit rate is less than the first bit rate, the difference of the current bit rate and the second bit rate is less than the switching threshold.

13. The bit rate switching device according to claim 12, **characterized in that**, further comprising:
a configuration module coupled to the control module and used to configure the triggering threshold and the switching threshold, wherein, the sum of the triggering threshold and the switching threshold is less than or equal to an absolute value of difference of the second bit rate and the first bit rate.

14. The bit rate switching device according to claim 12, **characterized in that**,
the search module is further used to determine a bit rate matched with the average network bandwidth as the current bit rate according to the average network bandwidth; or, predict an average network bandwidth in a next time period according to the average network bandwidth in the preset time period, and determine a bit rate matched with the average network bandwidth in the next period as the current bit rate.

15. The bit rate switching device according to claim 12, **characterized in that** the control module further comprises:
an information acquisition unit used to receive service quality information in the preset time period, the service quality information comprising: time delay, packet loss rate and network tittering in the time period;
a network estimation unit used to estimate a network state level in the preset time period according to a weighted value of the service quality information and in combination with a corresponding relation between a threshold interval where the weighted value is located and the network state level, wherein the smaller the weighted value of the service quality information is, the higher the network state level is; and
a media control unit used to compare the network state level with an adjustable threshold, retrieve the second data source of the multimedia data from the server to play or continuously retrieve the first data source to play according to a first comparison result or a second comparison result and in combination with a comparison result between the network state level and the adjustable threshold; wherein, the comparison result between the difference of the current bit rate and the first bit rate and the triggering threshold and the comparison result between the difference of the second bit rate and the current bit rate and the switching threshold are served as the first comparison result; and the comparison result between the difference of the first bit rate and the current bit rate, and the triggering threshold and the comparison result between the difference of the current bit rate and the second bit rate and the switching threshold are served as the second comparison result.

16. The bit rate switching device according to claim 12 or 15, **characterized in that**,
the control module is further used to, when the difference of the current bit rate and the first bit rate is greater than the triggering threshold and the difference of the second bit rate and the current bit rate is less than the switching threshold, retrieve the second data source of the multimedia data from the server to play; otherwise, continuously retrieve the first data source from the server to play; and when the difference of the first bit rate and the current bit rate is greater than the triggering threshold and the difference of the current bit rate and the second bit rate is less than the switching threshold, retrieve the second data source of the multimedia data from the server to play; otherwise, continuously retrieve the first data source from the server to play.

17. The bit rate switching device according to claim 12, **characterized in that**,
the control module is further used to prompt a user to switch the multimedia data and the current bit rate to be switched, record the number of prompts, and determine whether a bit rate switching command is received in the preset number of prompts; and when the bit rate switching command is received before reaching the preset number of prompts, or the bit rate switching command is not received after reaching the preset number of prompts, retrieve the second data source of the multimedia data from the server to play.

18. The bit rate switching device according to claim 12, **characterized in that**,
the control module is further used to record a current playing point of the first data source of the multimedia data, retrieve the second data source of the multimedia data from the server, and start playing the second data source of the multimedia data from the current playing point of the first data source.

19. The bit rate switching device according to claim 12, **characterized by** further comprising:
a retrieving module used to respond to a playing request for the multimedia data, and retrieve the first data source with the first bit rate from data sources with different bit rates of the multimedia data pre-stored in the server.

20. The bit rate switching device according to claim 19, **characterized in that**,
the retrieving module is further used to respond to the playing request, identify an accessed network type, an initial network bandwidth, the number of accessing network users and a terminal processing capability, and determine the first bit rate according to the network type accessed, a current network bandwidth, the number of accessing users of a current network and the terminal processing capability; or, respond to the playing request, identify a preset default bit rate, and take the default bit rate as the first bit rate.

21. The bit rate switching device according to claim 12, **characterized in that**,
the detection module is further used to determine the amount of multimedia data cached in a multimedia data cache in the preset time period during the process of playing the first data source of the multimedia data, calculate the amount of multimedia data cached in each second according to the amount of multimedia data cached in the multimedia data cache in the preset time period, and take the amount of multimedia data cached in each second as the average network bandwidth in the preset time period.
